# EUROPEAN PATENT SPECIFICATION

(11) **EP 2 377 036 B1**
(45) Date of publication and mention of the grant of the patent: **28.02.2018**
(21) Application number: 09836516.6
(22) Date of filing: 22.12.2009
(51) Int. Cl.: H04L 12/58, H04M 3/53, G06F 15/16

(54) **INSTANT COMMUNICATION WITH INSTANT TEXT DATA AND VOICE DATA**
UNMITTELBARE KOMMUNIKATION MIT UNMITTELBAREN TEXTDATEN UND SPRACHDATEN
COMMUNICATION INSTANTANEE AVEC DONNEES TEXTUELLES INSTANTANEES ET DONNEES VOCALES

(30) Priority: 31.12.2008 CN 200810187735; 21.12.2009 US 655080
(43) Date of publication of application: 19.10.2011
(73) Proprietor: Alibaba Group Holding Limited, Grand Cayman (KY)
(72) Inventor: LV, Kaili, Hangzhou (CN); ZHANG, Zheng, Hangzhou (CN); HUA, Bingyang, Hangzhou (CN); LIU, Zengguang, Hangzhou (CN); SU, Jie, Hangzhou (CN); MENG, Chaofeng, Hangzhou (CN); YUAN, Huaibin, Hangzhou (CN)
(74) Representative: Freeman, Jacqueline Carol
(86) International application number: PCT/US2009/006705
(87) International publication number: WO 2010/077335

(56) References cited:
- WO-A1-02/093889
- US-A1- 2004 003 041
- US-A1- 2004 003 041
- US-A1- 2008 010 355
- US-A1- 2008 187 125
- US-A1- 2008 194 260
- US-A1- 2008 194 260
- US-B1- 7 058 036

## Description

### CROSS REFERENCE TO OTHER APPLICATIONS

This application claims priority to People's Republic of China Patent Application No. 200810187735.4 entitled INSTANT COMMUNICATION METHOD, INSTANT COMMUNICATION SERVER, SPEECH SERVER AND SYSTEM THEREOF, filed December 31, 2008

### FIELD OF INVENTION

The present application relates to electronic communication, and in particular to message based communication.

### BACKGROUND OF THE INVENTION

The number of companies participating in Internet based e-commerce has been steadily increasing. There is growing competition among e-commerce websites. An important measure of website performance is its communication capabilities. Successful websites usually are capable of keeping the visitors engaged and providing easy communication with the visitors. Presently, many websites are configured with Web-based Instant Messaging (IM) software that allows users to communicate with the websites' support personnel. IM software allows people to identify online users and exchange information in real time.

Many website owners such as small businesses find it difficult to provide IM support since they are often unable to keep a dedicated website receptionist at the computer constantly. When customers make inquiries through the website, if the website owners cannot provide timely response, business opportunities may be lost.

US2004003041 relates to a messaging response system wherein a service providing system provides services to users via messaging communications. In accordance with an exemplary embodiment, multiple respondents servicing users through messaging communications may appear to simultaneously use a common "screen name" identifier.

US2008194260 relates to methods and apparatuses to connect a user of a telephony device to a selected one of service providers of a predefined category. One embodiment includes: providing a user interface element on a dial interface of a telephonic device to represent a communication reference associated with a pre-defined category of services; and responsive to a user selection of the user interface element, initiating a request from the telephonic device using the communication reference for a telephone connection to a service provider of the pre-defined category; where the service provider is to be selected from a plurality of service providers of the pre-defined category in response to the request and to be charged in response to a telephone lead connected to the service provider.

WO 02 093889 relates to a system establishes a telephone call between a calling party and a called party. The system receives a telephone call connection request, including identification of the called party, from the calling party and determines, based on the identification information, if the called party is currently connected to a data network. If the called party is currently connected to the data network, the system establishes the telephone call between the calling party and an instant messaging client of the called party.

US 7058036 relates to a wireless instant messaging system. A mobile station (MS), such as a cellular telephone for instance, may be registered with an instant messaging (IM) server as being available to receive instant messages via an IM proxy. A user at an IM client terminal may then send an instant message destined for a user at the MS. The IM server may direct the message to a service node (SN), which may convert the message into an industry standard SMS message and send the SMS message to the MS. At the MS, a user may read the SMS message and engage a callback feature, which will establish a dial-up voice connection between the MS and the SN. The user at the MS may then speak an instant message response, and the SN may record the response as a compressed audio file. The SN may then send the compressed audio file as an attachment to an instant message back to the user at the IM client terminal. The IM client terminal may then play the spoken response message.

The present invention is defined in the claims.

### BRIEF DESCRIPTION OF THE DRAWINGS

Various embodiments of the invention are disclosed in the following detailed description and the accompanying drawings.
FIG. 1 is a block diagram illustrating an embodiment of a system that supports instant messaging with speech.
FIG. 2 is a diagram illustrating an example setup for instant communication with voice support.
FIG. 3 is a flowchart illustrating an embodiment of an instant communication process.
FIG. 4 is a flowchart illustrating another embodiment of an instant communication process.
FIG. 5 is a block diagram illustrating an embodiment of an instant communication server.
FIG. 6 is a block diagram illustrating an embodiment of a speech server.

### DETAILED DESCRIPTION

The invention can be implemented in numerous ways, including as a process; an apparatus; a system; a composition of matter; a computer program product embodied on a computer readable storage medium; and/or a processor, such as a processor configured to execute instructions stored on and/or provided by a memory coupled to the processor. In this specification, these implementations, or any other form that the invention may take, may be referred to as techniques. In general, the order of the steps of disclosed processes may be altered within the scope of the invention. Unless stated otherwise, a component such as a processor or a memory described as being configured to perform a task may be implemented as a general component that is temporarily configured to perform the task at a given time or a specific component that is manufactured to perform the task. As used herein, the term 'processor' refers to one or more devices, circuits, and/or processing cores configured to process data, such as computer program instructions.

A detailed description of one or more embodiments of the invention is provided below along with accompanying figures that illustrate the principles of the invention. The invention is described in connection with such embodiments, but the invention is not limited to any embodiment. The scope of the invention is limited only by the claims and the invention encompasses numerous alternatives, modifications and equivalents. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

Instant Messaging (IM) based communication with voice capability is described. As used herein, IM refers to a form of communication in which users communicate substantially in real-time. In some embodiments, text data inputted by a first user (e.g., a website visitor) using special instant message software. The text data is transformed into speech data, and sent to a preconfigured phone number to be played to a second user (e.g., a website owner). After listening to the speech data, the second user may respond directly by voice, and the voice data is received by the server and sent to the first user's terminal to be played. Therefore, the website owner can communicate with website visitors anytime and anywhere without relying on text based messaging, thereby improving customer service.

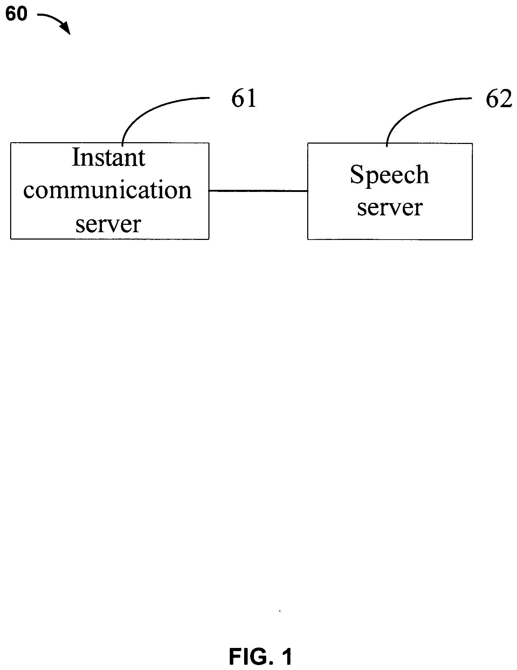

FIG. 1 is a block diagram illustrating an embodiment of a system that supports instant messaging with speech. In the example shown, system 60 includes an instant communication server 61 and a speech server 62, which may be implemented as software processes executing on separate devices or on the same device. In some embodiments, the system is configured as dedicated device and is owned and operated by the website owner. In some embodiments, the system is a shared system offering software as service to various subscribers. The instant communication server 61 is adapted to receive text data input by a user at a first user terminal. The first user terminal may be a computer, a personal digital assistant, a mobile device, or other web-enabled device that supports instant communication software. The instant communication server is further configured to send the text data to the speech server, receive speech data sent by the speech server, send the speech data to the first user terminal via the Web-based instant communication software, and instruct the first user terminal to play the speech data. The speech server 62 is configured to receive the text data sent via the instant communication software from the first user terminal and received and forwarded by the instant communication server, transform the text data into speech data, send the speech data via a preconfigured phone number to a corresponding second user terminal. The speech server is further configured to receive speech data sent by the second user from the second user terminal, and send the speech data from the second user to the instant communication server to be forwarded to the first user terminal.

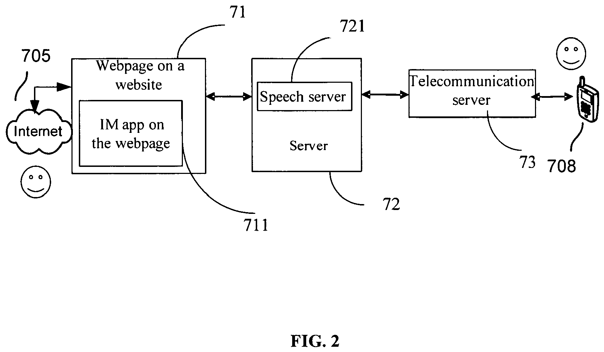

FIG. 2 is a diagram illustrating an example setup for instant communication with voice support. The setup includes a visitor terminal 71, an instant communication server 72 which includes a speech server application 721 executing on the instant communication server, and a telecommunication server 73. The visitor terminal can be a computer, a personal digital assistant, a mobile device, or other web-enabled device that allows the user to access instant communication service on the instant communication server. In this example, the instant communication server also functions as the web server for providing web pages or other user interface via a network 705 such as the Internet.

Using the visitor terminal, the website visitor inputs text data via an IM application 711 (e.g., a web browser based IM application (referred to as WebIM)) that is built in a webpage 71 of the website. IM application 711 sends the text data to a speech server 721 on server 72. The speech server 721 includes Text To Speech (TTS) software for transforming the text data into speech data. A variety of TTS software/engines may be used, for example ReadPlease®, ProVerbe Speech unit, TextAloud®, etc. On the speech server 721, a phone number associated with the website (e.g., the phone number of the website owner) is pre-configured and stored.

Once text data is received and transformed into speech, the speech server sends a communication request to the telecommunication server 73. In some embodiments, the communication request includes the preconfigured phone number and the speech data. The speech data may be formatted using MP3 or other audio format. In some embodiments, telecommunication server 73 supports Session Initiation Protocol (SIP) and/or Voice-Over-IP (VoIP), and has th e capabilities to connect to th e Public Switched Telephone Network (PSTN) and put calls through to a regular landline phone or mobile phone. In some embodiments, the telecommunication server by Yuantel of Beijing, China is used. When the call is put through, the speech data is played on a user terminal 708 associated with the phone number (such as a telephone) and the website owner is prompted to leave a voice message reply. The speech server 721 receives speech reply from the website owner made via user terminal 708 and forwards the reply to IM Application 711. IM application 711 displays a speech file storing the speech reply, and a player associated with the IM application (such as an audio player plug-in) allows the visitor to play the speech file. The visitor may enter additional text data via the IM application and the process is repeated.

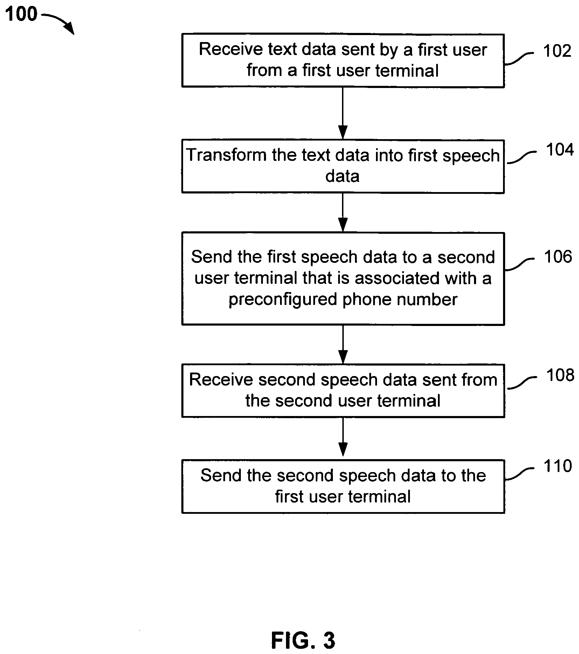

FIG. 3 is a flowchart illustrating an embodiment of an instant communication process. In this example, process 100 may be implemented on a system such as 60. The process starts at 102, when text data entered by the user via a first user terminal is received. In some embodiments, the text data is initially received at an instant communication server such as 61. At 104, the text data is transformed into a first set of speech data using the TTS software. In some embodiments, the text data is sent to a speech server such as 62 for the transformation. At 106, the first set of speech data is sent to a second user terminal that is associated with a preconfigured phone number. In some embodiments, the phone number is preconfigured on the speech server, which forwards the speech data to the second user terminal.

At 108, a second set of speech data sent from the second user terminal in response to the first set of speech data is received. The speech server is configured to receive the second set of speech data in this example. At 110, the second set of speech data is sent to the first user terminal to be played. In various embodiments, the second set of speech data may be sent directly from the speech server to the first user terminal, or sent to the instant communication server then forwarded to be displayed in connection with the WebIM application executing in the first user terminal.

The process may be repeated as the first user continues to enter additional text data.

In some embodiments, software code for implementing WebIM functions is added to webpage HTML code of the website to facilitate data transmission between website visitors and a server serving the website. An IM client is installed at a server of the website owner, with which the website owner can exchange text messages with website visitors using the IM client. Additional code (such as JavaScript code) is added to the webpage code text data to be sent to the speech server, speech data to be sent by the speech server, and the received speech data to be sent to a player of a website visitor's terminal. The player may be an independent application or a plug-in that is a part of the WebIM application executing on the first user terminal.

In step 104, the speech server transforms the text data into first speech data. In this embodiment, the text data is transformed for example using a speech synthesis technique TTS (Text To Speech). Other speech synthesis technology can also be used to transform text data into speech data. TTS, also known as speech transformation technology, is developed to transform text information into audible sound information, and via computer speech synthesis, any text can be transformed into highly natural speech. The technology is well known in the art, and further description is omitted.

In step 106, sending the first speech data to the second user terminal corresponding to the preconfigured phone number includes:

The speech server sends the first speech data to a telecommunication server, the telecommunication server connects to the PSTN and dials the preconfigured phone number on receipt of the first speech data, and sends the first speech data when the call is put through; that is, after transforming the text data into the first speech data, the speech server sends a communication request to the telecommunication server, the telecommunication server searches for a corresponding phone number based on the content of the request, and sends the first speech data to the second user terminal corresponding to the phone number when the call is put through, the second user terminal may respond and return responding speech data to the speech server via the telecommunication server after hearing a sound indication.

In this example, during the session, the speech server is configured to obtain all speech data, and the telecommunication server is configured to collect the second set of speech data returned by the second user terminal. Specifically, the speech server collects a voice response made after the sound indication by the second user terminal, and sends the second speech data to the Web-based instant communication software on the website. The Web-based instant communication software displays a speech file, and the user can use player software to hear the message replied from the second user terminal.

In some embodiments, the preconfigured phone number includes multiple phone numbers, and various intelligent response schemes can be configured. For example, different phone numbers from sales people from different regions are preconfigured on the server. Based on the Internet Protocol (IP) address of the first user terminal from which the text data is sent, the location of the website visitor may be determined. Thus, the transformed voice message is sent to the phone number that corresponds to or is in close proximity to the region from which the text message originates. As another example, different phone numbers may configured for different time periods such that a landline office telephone is configured to receive the messages during working hours, and a mobile phone is called afterhours. These two examples are described in greater detail below.

If the preconfigured phone number includes multiple phone numbers, i.e., one website owner may be associated with several phone numbers, for example, a phone number of Beijing, a phone number of Shanghai and a phone number of Shenzhen, and the step of initiating a call with the preconfigured phone number includes: determining an IP address of the first user terminal, determining a region to which the first user terminal belongs, selecting a phone number of an appropriate region based on the determination, and initiating a call with the selected phone number.

For example, a Beijing company markets and sells a device on a website, and designates contacts A and B as local distributor in Shanghai and Shenzen, respectively. The Beijing company may provide a main contact number of the company, contact numbers of the local distributors with IP addresses of their regions in a database of the speech server. The speech server determines an IP address of a website visitor, and if it determines that the visitor is from Beijing, a preconfigured phone number of the Beijing company is dialed; if it determines that the visitor is from Shanghai, a phone number configured with the Shanghai distributor is dialed; and if it determines that the visitor is from Shenzhen, a phone number configured with the Shenzhen distributor is dialed.

Similarly, if the preconfigured phone number includes phone numbers of multiple time periods, the step of the speech server initiating a call with the preconfigured phone number includes: determining a time when the first user terminal sends the text data; selecting a phone number of a corresponding time period based on the determined time; and initiating a call with the selected phone number.

For example, the website owner may set phone numbers answered in different time periods, for example, a fixed phone number of the website owner may be called in working hours, a mobile phone number of the website owner may be called off-work.

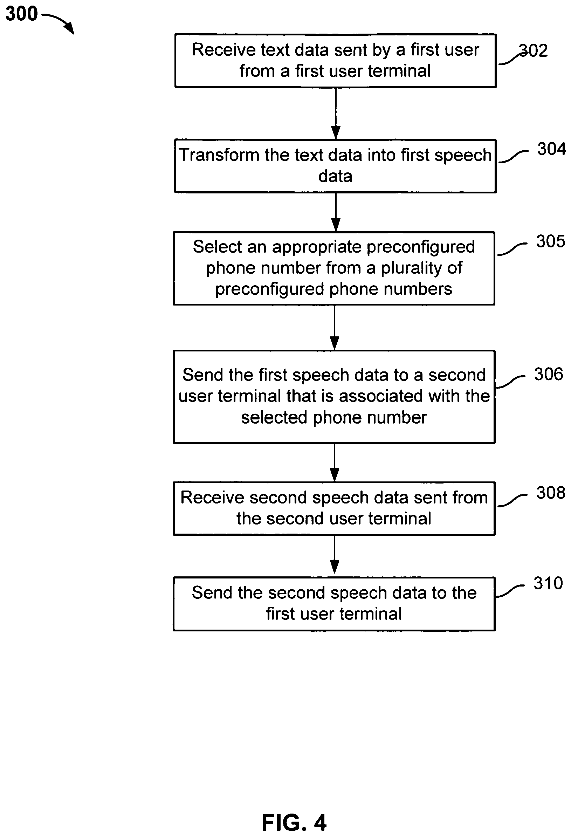

FIG. 4 is a flowchart illustrating another embodiment of an instant communication process. In this example, process 300 may be implemented on a system such as 60. The process starts at 302, when text data entered by the user via a first user terminal is received. At 304, the text data is transformed into a first set of speech data using TTS software.

At 305, an appropriate phone number is selected from a plurality of preconfigured phone numbers. The originating region of the text data, time of contact, and many other appropriate criteria can be used. At 306, the first set of speech data is sent to a second user terminal that is associated with the selected phone number.

At 308, a second set of speech data sent from the second user terminal in response to the first set of speech data is received. The speech server is configured to receive the second set of speech data in this example. At 310, the second set of speech data is sent to the first user terminal to be played. In various embodiments, the second set of speech data may be sent directly from the speech server to the first user terminal, or sent to the instant communication server then forwarded to the WebIM application executing in the first user terminal. In some embodiments, a data file icon or the like may be displayed in connection with an audio player program, and the reply speech data is played at the first user's option. In some embodiments, the data is directly played.

The process may be repeated as the first user continues to enter additional text data.

As can be seen, in the embodiment WebIM software can send text data inputted by the user to the speech server. The speech server transforms the text data into speech data, dials the preconfigured phone number, and plays the speech data when the phone number is put through. Then the person answering the call leaves a message after a sound indication. The message is transformed by the speech server into a speech file and sent to the WebIM to be played by a computer. The website owner may communicate with the visitor via a mobile phone or a fixed phone anytime and anywhere, which may improve the reception of Internet marketing, reduce prerequisite requirements for e-commerce; and connect the Internet and the telecommunication network.

For example, a typical small company sets up a website. The owner travels a lot and is thus unable to answer inquiries from the web in a timely manner. The website cannot keep its visitors engaged and potential business opportunities are often lost.

Using a system described above, the owner may bind his mobile phone number with the website, and receive visitors' inquiries by phone. For example, a visitor A visits the website and asks via WebIM: "What's the price for a rolling door?" In a traditional WebIM mode, no one would answer the visitor. But now the owner will receive a call and hear the speech "Visitor A says: What's the price for a rolling door, question mark, please leave a message for visitor A after the sound indication, beep". The owner may respond with "Hello, the cost varies depending on size and quantity. Please leave your phone number, I'll call you back." Then visitor A sees that the owner has sent a speech file on the WebIM, and can play back the message. The visitor may reply with his phone number. Then the owner receives another call and hears the phone number. Finally, the owner may call visitor A directly upon obtaining the phone number. A potential business opportunity is therefore captured.

Embodiments of the invention not only transform text data into speech data, but also allow website visitors and website owners to communicate freely from the separated Internet and telecommunication network.

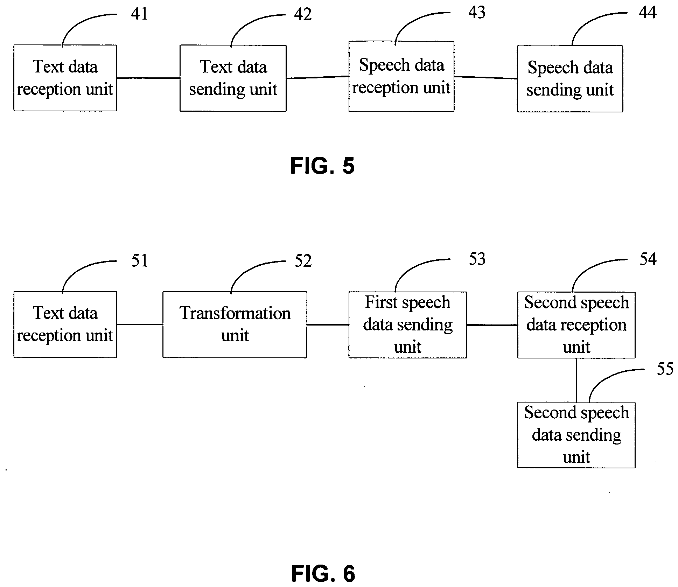

FIG. 5 is a block diagram illustrating an embodiment of an instant communication server. In this example, the instant communication server includes: a text data reception unit 41, a text sending unit 42, a speech data reception unit 43, and a speech data sending unit 44. The text data reception unit 41 is adapted to receive via Web-based instant communication software text data inputted by a first user terminal; the text sending unit 42 is adapted to send the text data received by the text data reception unit to a speech server; the speech data reception unit 43 is adapted to receive speech data sent by the speech server; the speech data sending unit 44 is adapted to send via the instant communication software the speech data received by the speech data reception unit to the first user terminal, particularly, the speech data may be sent to the first user terminal via the Web-based instant communication software.

By adding code in a webpage source file of the website, e.g. JavaScript code, the web page of the website not only has standard WebIM functions, but also has the function to transmit text data of the WebIM to a speech server and the function to receive speech files sent from the speech server.

For example, after a visitor inputs text data in the WebIM and sends it, the code transmits the text data to the speech server. A program on the speech server integrated with the speech synthesis technology such as TTS may transform the text data into speech data. On the other hand, the speech server sends speech data directly to the WebIM if receiving the speech data from a phone.

FIG. 6 is a block diagram illustrating an embodiment of a speech server. In the example shown, the speech server includes: a text data reception unit 51, a transformation unit 52, a first speech data sending unit 53, a second speech data reception unit 54, and a second speech data sending unit 55. The text data reception unit 51 is adapted to receive text data sent via instant communication software by a first user terminal; the transformation unit 52 is adapted to transform the text data received by the text data reception unit 51 into first speech data; the first speech data sending unit 53 is adapted to send via a preconfigured phone number the first speech data transformed by the transformation unit 52 to a corresponding second user terminal; the second speech data reception unit is adapted to receive second speech data sent by the second user terminal; the second speech data sending unit is adapted to send via the instant communication software the second speech data received by the second speech data reception unit 53 to the first user terminal.

The text data reception unit 51 sends text data subsequently sent by the first user terminal to the transformation unit 52, when receiving the text data subsequently sent via Web-based instant communication software by the first user terminal; and functions of the first speech data sending unit 53, the second speech data reception unit 54 and the second speech data sending unit 55 are performed subsequently.

The first speech data sending unit 53 includes: an initiation unit and a data sending unit. The initiation unit is adapted to initiate a call with the preconfigured phone number; the data sending unit is adapted to send the first speech data to a telecommunication server, and instruct the telecommunication server to play the first speech data when the call is put through; the second speech data reception unit is adapted to receive the second speech data returned from the second user terminal and collected by the communication server.

The speech server further includes: a pre-configuration unit, adapted to pre-bind a website with a phone number of the second user terminal, a plurality of phone numbers of the second user terminal of different regions, or phone numbers of the second user terminal of different time periods.

According to some embodiments, if the pre-configuration unit pre-binds the website with a plurality of phone numbers of the second user terminal of different regions, the second speech data sending unit further includes: a determination unit and a number sending unit. The determination unit is adapted to determine an IP address of the first user terminal, determine a region to which the first user terminal belongs, and select a phone number of a corresponding region from the plurality of phone numbers in the pre-configuration unit; the number sending unit is adapted to send the selected phone number to the initiation unit.

According to another preferred embodiment, if the pre-configuration unit pre-binds the website with phone numbers of the second user terminal of different time periods, the second speech data sending unit further includes: a determination unit, a selection unit and a number sending unit. The determination unit is adapted to determine a time when the first user terminal sends the text data; the selection unit is adapted to select a phone number of a corresponding time period in the pre-configuration unit based on the determined time; the number sending unit is adapted to send the selected number to the initiation unit.

It would be understood by those skilled in the art from the above descriptions of the embodiments that components of the above systems are described in units with different functions. The units described above can be implemented as software components executing on one or more general purpose processors, as hardware such as programmable logic devices and/or Application Specific Integrated Circuits designed to perform certain functions or a combination thereof. In some embodiments, the units can be embodied by a form of software products which can be stored in a nonvolatile storage medium (such as optical disk, flash storage device, mobile hard disk, etc.), including a number of instructions for making a computer device (such as personal computers, servers, network equipments, etc.) implement the methods described in the embodiments of the present invention. The units may be implemented on a single device or distributed across multiple devices. The functions of the units may be merged into one another or further split into multiple sub-units. The contribution of the technical solution of the invention can be represented via software products, which may be stored in storage medium such as ROM/RAM, magnetic disk and optical discs, and includes several instructions to enable a computer device (e.g. personal computer, server, or network device) to perform a method described in an embodiment or part of an embodiment of the invention.

Preferred embodiments of the invention are described above. It should be noted that, various modification and alternations may be made by those skilled in the art without departing from the scope of the invention as defined by the appended claims, which therefore should be included in the scope of the invention.

Although the foregoing embodiments have been described in some detail for purposes of clarity of understanding, the invention is not limited to the details provided. There are many alternative ways of implementing the invention. The disclosed embodiments are illustrative and not restrictive.

## Claims

1. An instant messaging communication method, comprising:
receiving text data sent by a first user from a first user terminal;
transforming, using a speech server (721), the text data into first speech data;
sending the first speech data to a second user terminal (708) that is associated with a preconfigured phone number;
receiving second speech data sent from the second user terminal (708) in response to the first speech data; and
sending the second speech data to the first user terminal,
wherein the sending of the first speech data to the second user terminal comprises:
initiating a call, using a telecommunication server (73), to the second user terminal via the preconfigured phone number;
sending, using the speech server, the first speech data to the telecommunication server (73);
instructing the telecommunication server (73) to send the first speech data in the event that the call to the second user terminal (708) is put through; and
wherein the receiving of the second speech data sent from the second user terminal (708) in response to the first speech data comprises:
instructing the speech server to receive, via the telecommunication server, from the second user terminal (708), the second speech data to be sent to the first user terminal, wherein the second speech data is returned by the second user terminal after a sound indication is played on the second user terminal.

2. The method of claim 1, wherein:
the preconfigured phone number is selected from a plurality of preconfigured phone numbers;
the plurality of preconfigured phone numbers correspond to a plurality of regions; and
the method further comprising selecting the preconfigured phone number from the plurality of preconfigured phone numbers, comprising:
determining an Internet Protocol IP address associated with the first user terminal;
determining a region associated with the IP address; and
selecting the preconfigured phone number from the plurality of preconfigured phone numbers based on the region associated with the IP address and the plurality of regions associated with the preconfigured phone numbers.

3. The method of claim 2, wherein the plurality of preconfigured phone numbers correspond to a plurality of time periods.

4. The method of claim 3, further comprising selecting the preconfigured phone number from the plurality of preconfigured phone numbers, comprising:
determining a time associated with receiving the text data; and
selecting the preconfigured phone number from the plurality of preconfigured phone number based on the time associated with receiving the text data and the plurality of time periods.

5. An instant messaging communication system (60) comprising:
one or more processors configured to:
receive text data sent by a first user from a first user terminal;
transform, using a speech server (721), the text data into first speech data;
send the first speech data to a second user terminal (708) that is associated with a preconfigured phone number; and
receive second speech data sent from the second user terminal in response to the first speech data; and
send the second speech data to the first user terminal; and
one or more memories coupled to the one or more processors, configured to provide the one or more processors with instructions;
wherein the one or more processors is further configured to:
initiate a call, using a telecommunication server (73), to the second user terminal (708) via the preconfigured phone number;
send, using the speech server, the first speech data to the telecommunication server (73);
instruct the telecommunication server (73) to send the first speech data in the event that the call to the second user terminal (708) is put through; and
instruct the speech server to receive, via the telecommunication server, from the second user terminal (708), the second speech data to be sent to the first user terminal, wherein the second speech data is returned by the second user terminal after a sound indication is played on the second user terminal.

6. The system (60) of claim 5, wherein the text data is an Instant Message entered by the first user at the first terminal.

7. The system (60) of claim 5, wherein the text data is sent to the speech server (721) configured to perform text to speech.

8. The system (60) of claim 5, wherein the one or more processors are further configured to play the second speech data on the first user terminal.

9. The system (60) of claim 5, wherein the preconfigured phone number is configured on a speech server (721) configured to transform the text data into the first speech data.

10. The system (60) of claim 5, wherein the one or more processors are further configured to send the first speech data to the second user terminal (708) that is associated with the preconfigured phone number by sending the first speech data to a telecommunication server.

11. The system (60) of claim 5, wherein the preconfigured phone number is selected from a plurality of preconfigured phone numbers.

12. The system (60) of claim 11, wherein the plurality of preconfigured phone numbers correspond to a plurality of regions.

13. The system (60) of claim 12, wherein the one or more processors are further configured to select the preconfigured phone number from the plurality of preconfigured phone numbers, comprising:
determining an Internet Protocol IP address associated with the first user terminal;
determining a location associated with the first user terminal; and
selecting the preconfigured phone number from the plurality of preconfigured phone numbers based on the region associated with the IP address and the plurality of regions associated with the preconfigured phone numbers.

14. The system (60) of claim 11, wherein the plurality of preconfigured phone numbers correspond to a plurality of time periods.

15. The system (60) of claim 14, further wherein the one or more processors are further configured to select the preconfigured phone number from the plurality of preconfigured phone numbers, comprising:
determining a time associated with receiving the text data; and
selecting the preconfigured phone number from the plurality of preconfigured phone number based on the time associated with receiving the text data and the plurality of time periods.

16. The method of claim 1, wherein:
the sending of the first speech data to the telecommunication server (73) comprises:
sending a request to the telecommunication server (73), the request including the first speech data;
the preconfigured phone number is selected from a plurality of preconfigured phone numbers, and the selection comprises:
determining a corresponding phone number based on contents of the request; and
selecting the second user terminal based on the corresponding phone number.

## Patentansprüche

1. Sofortnachrichtenkommunikationsverfahren, das Folgendes beinhaltet:
Empfangen von von einem ersten Benutzer von einem ersten Benutzerendgerät gesendeten Textdaten;
Umwandeln, mit einem Sprachserver (721), der Textdaten in erste Sprachdaten;
Senden der ersten Sprachdaten zu einem zweiten Benutzerendgerät (708), das mit einer vorkonfigurierten Telefonnummer assoziiert ist;
Empfangen von von dem zweiten Benutzerendgerät (708) gesendeten zweiten Sprachdaten als Reaktion auf die ersten Sprachdaten; und
Senden der zweiten Sprachdaten zum ersten Benutzerendgerät,
wobei das Senden der ersten Sprachdaten zum zweiten Benutzerendgerät Folgendes beinhaltet:
Einleiten eines Anrufs, mit einem Telekommunikationsserver (73), zu dem zweiten Benutzerendgerät über die vorkonfigurierte Telefonnummer;
Senden, mit dem Sprachserver, der ersten Sprachdaten zum Telekommunikationsserver (73);
Anweisen des Telekommunikationsservers (73) zum Senden der ersten Sprachdaten, falls der Anruf zum zweiten Benutzerendgerät (708) durchgestellt wird; und
wobei das Empfangen der vom zweiten Benutzerendgerät (708) gesendeten zweiten Sprachdaten als Reaktion auf die erste Sprachdaten Folgendes beinhaltet:
Anweisen des Sprachservers zum Empfangen, über den Telekommunikationsserver vom zweiten Benutzerendgerät (708), der zum ersten Benutzerendgerät zu sendenden zweiten Sprachdaten, wobei die zweiten Sprachdaten vom zweiten Benutzerendgerät nach dem Wiedergeben einer Tonanzeige auf dem zweiten Benutzerendgerät zurückgegeben werden.

2. Verfahren nach Anspruch 1, wobei:
die vorkonfigurierte Telefonnummer aus mehreren vorkonfigurierten Telefonnummern ausgewählt wird;
die mehreren vorkonfigurierten Telefonnummern mehreren Regionen entsprechen; und
wobei das Verfahren ferner das Auswählen der vorkonfigurierten Telefonnummer aus den mehreren vorkonfigurierten Telefonnummern beinhaltet, das Folgendes beinhaltet:
Feststellen einer mit dem ersten Benutzerendgerät assoziierten IP-(Internet Protocol)-Adresse;
Feststellen einer mit der IP-Adresse assoziierten Region; und
Auswählen der vorkonfigurierten Telefonnummer aus den mehreren vorkonfigurierten Telefonnummern auf der Basis der mit der IP-Adresse assoziierten Region und der mehreren mit den vorkonfigurierten Telefonnummern assoziierten Regionen.

3. Verfahren nach Anspruch 2, wobei die mehreren vorkonfigurierten Telefonnummern mehreren Zeitperioden entsprechen.

4. Verfahren nach Anspruch 3, das ferner das Auswählen der vorkonfigurierten Telefonnummer aus den mehreren vorkonfigurierten Telefonnummern beinhaltet, das Folgendes beinhaltet:
Feststellen einer mit dem Empfang der Textdaten assoziierten Zeit; und
Auswählen der vorkonfigurierten Telefonnummer aus den mehreren vorkonfigurierten Telefonnummern auf der Basis der mit dem Empfang der Textdaten assoziierten Zeit und der mehreren Zeitperioden.

5. Sofortnachrichtenkommunikationssystem (60), das Folgendes umfasst:
einen oder mehrere Prozessoren, konfiguriert zum:
Empfangen von von einem ersten Benutzer von einem ersten Benutzerendgerät gesendeten Textdaten;
Umwandeln, mit einem Sprachserver (721), der Textdaten in erste Sprachdaten;
Senden der ersten Sprachdaten zu einem zweiten Benutzerendgerät (708), das mit einer vorkonfigurierten Telefonnummer assoziiert ist; und
Empfangen von zweiten Sprachdaten, die vom zweiten Benutzerendgerät als Reaktion auf die ersten Sprachdaten gesendet werden; und
Senden der zweiten Sprachdaten zum ersten Benutzerendgerät; und
einen oder mehrere mit den ein oder mehreren Prozessoren gekoppelte Speicher, konfiguriert zum Versorgen der ein oder mehreren Prozessoren mit Anweisungen;
wobei die ein oder mehreren Prozessoren ferner konfiguriert sind zum:
Einleiten eines Anrufs, mit einem Telekommunikationsserver (73), zum zweiten Benutzerendgerät (708) über die vorkonfigurierte Telefonnummer;
Senden, mit dem Sprachserver, der ersten Sprachdaten zum Telekommunikationsserver (73);
Anweisen des Telekommunikationsservers (73) zum Senden der ersten Sprachdaten, falls der Anruf zum zweiten Benutzerendgerät (708) durchgestellt wird; und
Anweisen des Sprachservers zum Empfangen, über den Telekommunikationsserver vom zweiten Benutzerendgerät (708), der zweiten zum ersten Benutzerendgerät zu sendenden Sprachdaten, wobei die zweiten Sprachdaten vom zweiten Benutzerendgerät nach dem Wiedergeben einer Tonanzeige auf dem zweiten Benutzerendgerät zurückgegeben werden.

6. System (60) nach Anspruch 5, wobei die Textdaten eine vom ersten Benutzer am ersten Endgerät eingegebene Sofortnachricht sind.

7. System (60) nach Anspruch 5, wobei die Textdaten zum Sprachserver (721) gesendet werden, konfiguriert zum Durchführen von Text-in-Sprache-Umwandlung.

8. System (60) nach Anspruch 5, wobei die ein oder mehreren Prozessoren ferner zum Wiedergeben der zweiten Sprachdaten auf dem ersten Benutzerendgerät konfiguriert sind.

9. System (60) nach Anspruch 5, wobei die vorkonfigurierte Telefonnummer auf einem Sprachserver (721) konfiguriert ist, konfiguriert zum Umwandeln der Textdaten in die ersten Sprachdaten.

10. System (60) nach Anspruch 5, wobei die ein oder mehreren Prozessoren ferner zum Senden der ersten Sprachdaten zum zweiten Benutzerendgerät (708) konfiguriert sind, das mit der vorkonfigurierten Telefonnummer assoziiert ist, durch Senden der ersten Sprachdaten zu einem Telekommunikationsserver.

11. System (60) nach Anspruch 5, wobei die vorkonfigurierte Telefonnummer aus mehreren vorkonfigurierten Telefonnummern ausgewählt ist.

12. System (60) nach Anspruch 11, wobei die mehreren vorkonfigurierten Telefonnummern mehreren Regionen entsprechen.

13. System (60) nach Anspruch 12, wobei die ein oder mehreren Prozessoren ferner zum Auswählen der vorkonfigurierten Telefonnummer aus den mehreren vorkonfigurierten Telefonnummern konfiguriert sind, das Folgendes beinhaltet:
Feststellen einer mit dem ersten Benutzerendgerät assoziierten IP-(Internet Protocol)-Adresse;
Feststellen eines mit dem ersten Benutzerendgerät assoziierten Orts; und
Auswählen der vorkonfigurierten Telefonnummer aus den mehreren vorkonfigurierten Telefonnummern auf der Basis der mit der IP-Adresse assoziierten Region und der mehreren mit den vorkonfigurierten Telefonnummern assoziierten Regionen.

14. System (60) nach Anspruch 11, wobei die mehreren vorkonfigurierten Telefonnummern mehreren Zeitperioden entsprechen.

15. System (60) nach Anspruch 14, wobei die ein oder mehreren Prozessoren ferner zum Auswählen der vorkonfigurierten Telefonnummer aus den mehreren vorkonfigurierten Telefonnummern konfiguriert sind, das Folgendes beinhaltet:
Feststellen einer mit dem Empfang der Textdaten assoziierten Zeit; und
Auswählen der vorkonfigurierten Telefonnummer aus den mehreren vorkonfigurierten Telefonnummer auf der Basis der mit dem Empfang der Textdaten assoziierten Zeit und der mehreren Zeitperioden.

16. Verfahren nach Anspruch 1, wobei:
das Senden der ersten Sprachdaten zum Telekommunikationsserver (73) Folgendes beinhaltet:
Senden einer Anforderung zum Telekommunikationsserver (73), wobei die Anforderung die ersten Sprachdaten beinhaltet;
die vorkonfigurierte Telefonnummer aus mehreren vorkonfigurierten Telefonnummer ausgewählt ist und die Auswahl Folgendes beinhaltet:
Feststellen einer entsprechenden Telefonnummer auf der Basis von Inhalten der Anforderung; und
Auswählen des zweiten Benutzerendgeräts auf der Basis der entsprechenden Telefonnummer.

## Revendications

1. Un procédé de communication par messagerie instantanée, comprenant :
la réception de données textuelles envoyées par un premier utilisateur à partir d'un premier terminal d'utilisateur,
la transformation, au moyen d'un serveur vocal (721), des données textuelles en premières données vocales,
l'envoi des premières données vocales à un deuxième terminal d'utilisateur (708) qui est associé à un numéro de téléphone préconfiguré,
la réception de deuxièmes données vocales envoyées à partir du deuxième terminal d'utilisateur (708) en réponse aux premières données vocales, et
l'envoi des deuxièmes données vocales au premier terminal d'utilisateur, où l'envoi des premières données vocales au deuxième terminal d'utilisateur comprend :
l'établissement d'un appel, au moyen d'un serveur de télécommunication (73), vers le deuxième terminal d'utilisateur par l'intermédiaire du numéro de téléphone préconfiguré,
l'envoi, au moyen du serveur vocal, des premières données vocales au serveur de télécommunication (73),
l'ordre donné au serveur de télécommunication (73) d'envoyer les premières données vocales dans le cas où l'appel vers le deuxième terminal d'utilisateur (708) est établi, et
où la réception des deuxièmes données vocales envoyées à partir du deuxième terminal d'utilisateur (708) en réponse aux premières données vocales comprend :
l'ordre donné au serveur vocal de recevoir, par l'intermédiaire du serveur de télécommunication, à partir du deuxième terminal d'utilisateur (708), les deuxièmes données vocales à envoyer au premier terminal d'utilisateur, où les deuxièmes données vocales sont renvoyées par le deuxième terminal d'utilisateur après la diffusion d'une indication sonore sur le deuxième terminal d'utilisateur.

2. Le procédé selon la Revendication 1, où :
le numéro de téléphone préconfiguré est sélectionné parmi une pluralité de numéros de téléphone préconfigurés,
la pluralité de numéros de téléphone préconfigurés correspond à une pluralité de zones, et
le procédé comprenant en outre la sélection du numéro de téléphone préconfiguré parmi la pluralité de numéros de téléphone préconfigurés, comprenant :
la détermination d'une adresse Protocole Internet, IP, associée au premier terminal d'utilisateur,
la détermination d'une zone associée à l'adresse IP, et
la sélection du numéro de téléphone préconfiguré parmi la pluralité de numéros de téléphone préconfigurés en fonction de la zone associée à l'adresse IP et de la pluralité de zones associées aux numéros de téléphone préconfigurés.

3. Le procédé selon la Revendication 2, où la pluralité de numéros de téléphone préconfigurés correspond à une pluralité de périodes temporelles.

4. Le procédé selon la Revendication 3, comprenant en outre la sélection du numéro de téléphone préconfiguré parmi la pluralité de numéros de téléphone préconfigurés, comprenant :
la détermination d'un instant associé à la réception des données textuelles, et
la sélection du numéro de téléphone préconfiguré parmi la pluralité de numéros de téléphone préconfigurés en fonction de l'instant associé à la réception des données textuelles et de la pluralité de périodes temporelles.

5. Un système de communication par messagerie instantanée (60) comprenant :
un ou plusieurs processeurs configurés de façon à :
recevoir des données textuelles envoyées par un premier utilisateur à partir d'un premier terminal d'utilisateur,
transformer, au moyen d'un serveur vocal (721), les données textuelles en premières données vocales,
envoyer les premières données vocales à un deuxième terminal d'utilisateur (708) qui est associé à un numéro de téléphone préconfiguré, et
recevoir des deuxièmes données vocales envoyées à partir du deuxième terminal d'utilisateur en réponse aux premières données vocales, et
envoyer les deuxièmes données vocales au premier terminal d'utilisateur, et
une ou plusieurs mémoires couplées aux un ou plusieurs processeurs, configurées de façon à fournir aux un ou plusieurs processeurs des instructions, où les un ou plusieurs processeurs sont configurés en outre de façon à :
établir un appel, au moyen d'un serveur de télécommunication (73), vers le deuxième terminal d'utilisateur (708) par l'intermédiaire du numéro de téléphone préconfiguré,
envoyer, au moyen du serveur vocal, les premières données vocales au serveur de télécommunication (73),
ordonner au serveur de télécommunication (73) d'envoyer les premières données vocales dans le cas où l'appel vers le deuxième terminal d'utilisateur (708) est établi, et
ordonner au serveur vocal de recevoir, par l'intermédiaire du serveur de télécommunication, à partir du deuxième terminal d'utilisateur (708), les deuxièmes données vocales à envoyer au premier terminal d'utilisateur, où les deuxièmes données vocales sont renvoyées par le deuxième terminal d'utilisateur après la diffusion d'une indication sonore sur le deuxième terminal d'utilisateur.

6. Le système (60) selon la Revendication 5, où les données textuelles sont un message instantané entré par le premier utilisateur au niveau du premier terminal.

7. Le système (60) selon la Revendication 5, où les données textuelles sont envoyées au serveur vocal (721) configuré de façon à transformer du texte en voix.

8. Le système (60) selon la Revendication 5, où les un ou plusieurs processeurs sont configurés en outre de façon à diffuser les deuxièmes données vocales sur le premier terminal d'utilisateur.

9. Le système (60) selon la Revendication 5, où le numéro de téléphone préconfiguré est configuré sur un serveur vocal (721) configuré de façon à transformer les données textuelles en les premières données vocales.

10. Le système (60) selon la Revendication 5, où les un ou plusieurs processeurs sont configurés en outre de façon à envoyer les premières données vocales au deuxième terminal d'utilisateur (708) qui est associé au numéro de téléphone préconfiguré par l'envoi des premières données vocales à un serveur de télécommunication.

11. Le système (60) selon la Revendication 5, où le numéro de téléphone préconfiguré est sélectionné parmi une pluralité de numéros de téléphone préconfigurés.

12. Le système (60) selon la Revendication 11, où la pluralité de numéros de téléphone préconfigurés correspond à une pluralité de zones.

13. Le système (60) selon la Revendication 12, où les un ou plusieurs processeurs sont configurés en outre de façon à sélectionner le numéro de téléphone préconfiguré parmi la pluralité de numéros de téléphone préconfigurés, comprenant :
la détermination d'une adresse Protocole Internet, IP, associée au premier terminal d'utilisateur,
la détermination d'un emplacement associé au premier terminal d'utilisateur, et
la sélection du numéro de téléphone préconfiguré parmi la pluralité de numéros de téléphone préconfigurés en fonction de la zone associée à l'adresse IP et de la pluralité de zones associées aux numéros de téléphone préconfigurés.

14. Le système (60) selon la Revendication 11, où la pluralité de numéros de téléphone préconfigurés correspond à une pluralité de périodes temporelles.

15. Le système (60) selon la Revendication 14, où en outre les un ou plusieurs processeurs sont configurés en outre de façon à sélectionner le numéro de téléphone préconfiguré parmi la pluralité de numéros de téléphone préconfigurés, comprenant :
la détermination d'un instant associé à la réception des données textuelles, et
la sélection du numéro de téléphone préconfiguré parmi la pluralité de numéros de téléphone préconfigurés en fonction de l'instant associé à la réception des données textuelles et de la pluralité de périodes temporelles.

16. Le procédé selon la Revendication 1, où :
l'envoi des premières données vocales au serveur de télécommunication (73) comprend :
l'envoi d'une demande au serveur de télécommunication (73), la demande contenant les premières données vocales,
le numéro de téléphone préconfiguré est sélectionné parmi une pluralité de numéros de téléphone préconfigurés, et la sélection comprend :
la détermination d'un numéro de téléphone correspondant en fonction de contenus de la demande, et
la sélection du deuxième terminal d'utilisateur en fonction du numéro de téléphone correspondant.
